Europäisches Patentamt

European Patent Office

Office européen des brevets

(11) Publication number: 0 178 838
A2

## (12) EUROPEAN PATENT APPLICATION

(21) Application number: 85307194.2

(22) Date of filing: 08.10.85

(51) Int. Cl.⁴: F 16 L 19/02

(30) Priority: 17.10.84 GB 8426259

(43) Date of publication of application:
23.04.86 Bulletin 86/17

(84) Designated Contracting States:
AT BE CH DE FR GB IT LI LU NL SE

(71) Applicant: ANSON LIMITED
Queensway North Team Valley Trading Estate
Gateshead Tyne & Wear, NE11 0NX(GB)

(72) Inventor: Anderson, Robert William
35 Kepwell Road
Prudhoe Northumberland(GB)

(74) Representative: Gura, Henry Alan et al,
MEWBURN ELLIS & CO. 2/3 Cursitor Street
London EC4A 1BQ(GB)

(54) Method of manufacturing lengths of pipe.

(57) A method of manufacturing lengths of pipe adapted to be interconnected to form a pipeline comprises the steps of providing lengths of tubing (2) and integrally forming correspondingly-shaped male and female connecting pieces (18,12) at the opposed ends of each length of tubing. The female connecting piece has an external screw-thread (16) formed thereon, while a nut (24) having an internal screw-thread (26) corresponding with the external screw-thread on the female connecting piece (12) is located on each length of tubing (2). Abutment means (28,32) are provided on the nut (24) and on the male connecting piece (18) such that, on location of the male connecting piece (18) of one length of pipe in the female connecting piece )12) of another length of pipe, the nut (24) on the one length can be screwed onto the female connecting piece (12) of the other length to effect a connection between the two lengths of pipe.

FIG.4

- 1 -

## METHOD OF MANUFACTURING LENGTHS OF PIPE

This invention relates to a method of manufacturing lengths of pipe which are adapted to be interconnected with one another to form a pipeline for carrying fluids, and has particular, though not exclusive, application to such pipelines for conveying fluids at high pressure in oil exploration and related industries.

Oil pipelines associated with exploration drilling rigs commonly comprise a series of interconnected lengths of steel pipe each of which lengths, which may be typically 1.5, 3.0 or 3.65 metres long, includes a male connecting piece at one end and a female connecting piece at the other end. Adjacent male and female components are secured together by an associated nut to effect what is commonly referred to as a hammer lug union. Said nut comprises an internally threaded annulus the outer wall of which is provided with a series of radially-projecting, circumferentially spaced lugs whereby rotation of the nut to effect the union can be achieved by applying a generally tangential force to the lugs by means of a hammer.

For the last 50 years or so, the male and female connecting pieces of such a union have comprised separate components either screwed onto or welded to the associated end of a length of pipe. However, at certain pipe sizes and operating pressures associated with oil exploration, screw-threaded attachment of the connecting pieces to the length of pipe is not permissible, in that such attachment cannot fulfil the safety requirements of the certifying authorities, while welded connections are also only acceptable subject to very stringent testing procedures. Further, there is always a degree of danger associated with welded joints in hostile environments, in that the weld could be susceptible to stress cracking under high pressures due to the type of liquid or gas being conveyed along the pipeline.

It would be desirable to be able to provide a length of pipe having male and female connecting pieces and less prone to the problems associated with the existing welded and screwed-on types.

According to one aspect of the present invention there is provided a method of manufacturing lengths of pipe adapted to be interconnected to form a pipeline, the method comprising the steps of providing lengths of tubing, integrally forming at the opposed ends of each length of tubing correspondingly-shaped male and female connecting pieces, the female connecting piece having an external screw-thread formed thereon, locating a nut on each length of tubing, the nut having an internal screw-thread corresponding with the external screw-thread on the female connecting piece, and providing co-operating abutment means between each nut and the associated

- 3 -

male connecting piece, the arrangement being such that, on location of the male connecting piece of one length of pipe in the female connecting piece of another length of pipe, the nut on the one length can be screwed onto the female connecting piece of the other length to effect a connection between the two lengths of pipe.

Preferably the opposed ends of each length of tubing are axially compressed to provide increased-diameter end extents to said lengths, said end extents then being machined into the male and female connecting pieces. Conveniently the compression of the ends of the lengths of tubing is carried out with the tubing at a temperature typically between 800°C and 1200°C.

According to a further aspect of the present invention, there is provided a length of pipe manufactured as detailed above and comprising a length of tubing having male and female connecting pieces integrally formed at the opposed ends thereof, the female connecting piece having an external screw-thread formed thereon, a nut located on said length of tubing and having an internal screw-thread corresponding with the external screw-thread on the female connecting piece, and co-operating abutment means adapted to react between the nut and the male connecting piece whereby, on location of the male connecting piece of one length of pipe in the female connecting piece of another length of pipe, the nut on the one length can be screwed onto the female connecting piece of the other length to effect a connection between the two lengths of pipe.

.The nut may be of the hammer lug type, having a plurality of circumferentially-spaced, radially projecting lugs formed on the outer surface thereof.

The co-operating abutment means may comprise an annular collar located behind the male connecting piece and adapted to react between said male connecting piece and an internal surface of the nut.

Alternatively, said abutment means may comprise a plurality of segmental collets, typically three each of 120° angular extent, located within the nut to react between an internal surface of the nut and a rear surface of the male connecting piece.

The two aspects of the invention are illustrated by way of example in the accompanying drawings, in which:

Figs. 1 to 5 show various stages during the method of manufacture of a length of pipe according to the invention, and

Fig. 6 shows an alternative length of pipe according to the invention.

Lengths of pipe manufactured according to the method of the invention may be of various sizes, typically 1.5, 3.0 or 3.65 metre lengths of steel tubing of 25mm to 150mm nominal bore having wall thicknesses of between 10mm and 20mm, and may be adpated to carry gases or various

- 5 -

liquids such as crude oil, mud or water at cold working pressures of up to 14.5 kgm/mm².

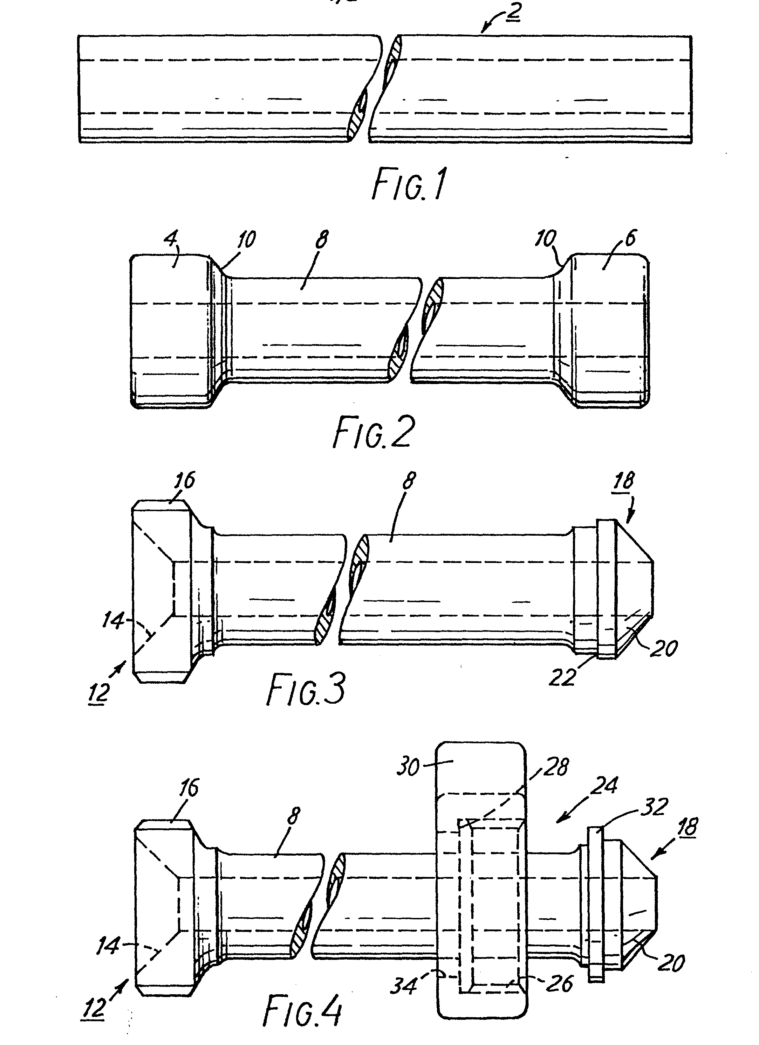

Referring to Figs. 1 to 5, manufacture of such pipe begins by providing an extent of steel tubing indicated generally at 2 in Fig. 1 and of length somewhat greater than the length of pipe to be made therefrom.

The tubing 2 is heated to a temperature of between 800°C and 1200°C and the end regions thereof are compressed by applying axial forces thereto to provide the increased-diameter portions 4,6 shown in Fig. 2. More particularly, the end regions or gathers of the tubing 2 are subjected to an upset forging machine comprising a two-piece die and an internal form tool such that the bore through the end portions 4,6 remains the same as that through the tubing 2 while the transition of the outer diameter of the tubing from that of the main intermediate extent 8 to that of the end portions 4,6 takes the form of a steady incline shown at 10. Performing this step at elevated temperature ensures a uniform grain structure in the end portions 4,6 and consequential inherent strength in said portions.

The end portion 4 of the tubing is then machined to form a female connecting piece 12 which includes a tapering recess 14 and an external screw-thread 16, while the end portion 6 of the tubing is similarly machined to form a corresponding male connecting piece 18 including a tapering porton 20 having a rear, annular abutment surface 22 thereto for reasons which will become apparent.

A hammer lug nut 24, which includes an internal screw-thread 26 and a rear internal abutment surface 28 and the outer surface of which nut is provided with a series of circumferentially spaced, radially-projecting lugs 30, is located over the male connecting piece 18 and onto the main extent 8 of the tubing. A restraining collar 32 is then located behind the surface 22 of the male connecting piece 18, said collar having a diameter just less than that of the screw-thread 26 of the nut 24 but greater than that of the bore 34 through the rear face of said nut 24.

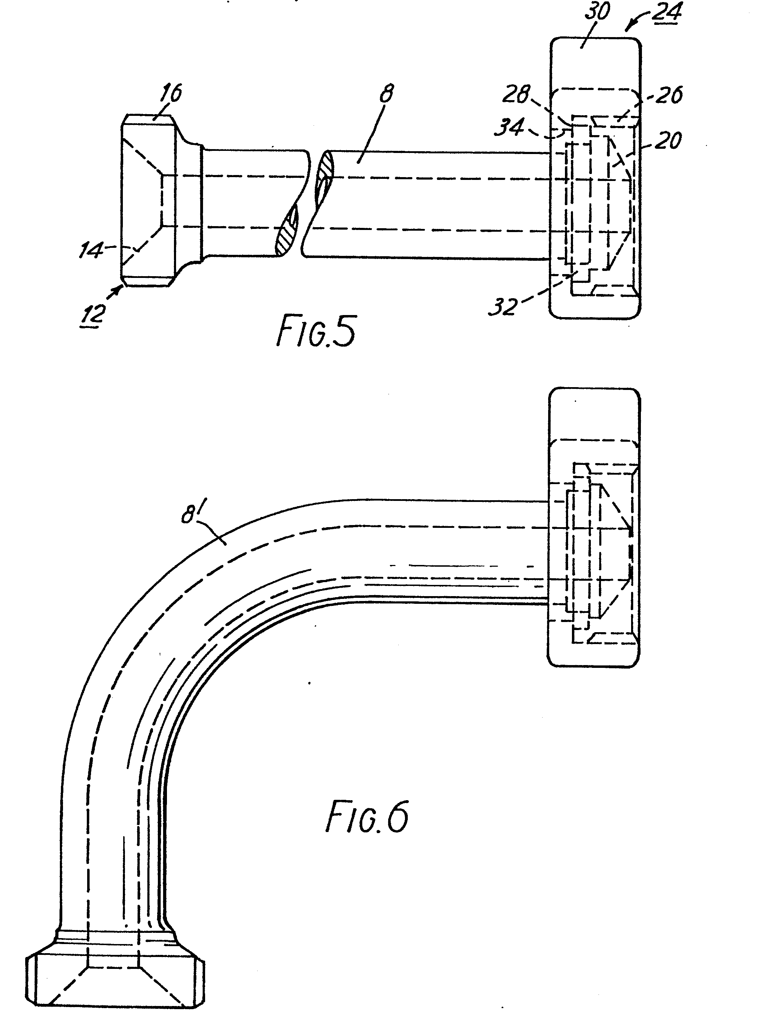

The length of pipe is completed by locating the nut 24 over the male connecting piece 18 with the collar 32 abutting the surface 28 of the nut 24 as shown in Fig. 5.

Two lengths of pipe as described above are interconnected as follows. The tapering portion 20 of the male connecting piece 18 of one length of pipe is located in the correspondingly-shaped recess 14 of the female connecting piece 12 of the other length of pipe, and the internal screw-thread 26 of the nut 24 on said one length of pipe is engaged with the external screw-thread 16 of the female connecting piece 12 of said other length of pipe. The nut 24 is then rotated by hammering on the lugs 30 of the nut in a direction substantially tangentially of the nut thereby tightening said nut over the female connecting piece.  As the nut is tightened, the tapering portion 20 is drawn into the recess 14 until engagement one with the other is made, final sealing contact being achieved with the rear surface 28 on the nut 24 abutting the collar 32 on the male connecting piece and urging the two components into sealing engagement with each other.  If desired or if necessary, seals (not shown) could be provided between the abutting surfaces of the male and female connecting pieces to ensure a fluid-tight joint therebetween.

Instead of providing the collar 32 against which the nut 24 reacts, a series of segmental collets, for example three each with an angular extent of 120°, may be located within the nut 24 to react between the surface 28 of the nut and the surface 22 of the male connecting piece 18.  Other arrangements will be apparent to those skilled in the art.

The main extent 8 of the length of pipe may be other than linear, and may comprise, for example, an elbow 8' as shown in Fig. 6, although many and varied configurations are possible.

Conveniently the finished assembly as shown in Fig. 5 or Fig. 6 would be pressure tested and would be suitably colour coded according to its cold working pressure rating.

0178838

- 8 -

<u>CLAIMS</u>

1. A method of manufacturing lengths of pipe adapted to be interconnected to form a pipeline comprising the step of providing lengths of tubing (2), and characterised by the steps of integrally forming at the opposed ends of each length of tubing (2) correspondingly-shaped male and female connecting pieces (18,12), the female connecting piece (12) having an external screw-thread (16) formed thereon, locating a nut (24) on each length of tubing (2), the nut (24) having an internal screw-thread (26) corresponding with the external screw-thread (16) on the female connecting piece (12), and providing co-operating abutment means (28,32) between each nut (24) and the associated male connecting piece (18), the arrangement being such that, on location of the male connecting piece (18) of one length of pipe in the female connecting piece (12) of another length of pipe, the nut (24) on the one length can be screwed onto the female connecting piece (12) of the other length to effect a connection between the two lengths of pipe.

2. A method as claimed in claim 1 and comprising the step of axially compressing the opposed ends of each length of tubing (2) to provide increased-diameter end extents (4,6) to said length, and then machining said end extents (4,6) into the male and female connecting pieces (18,12).

3. A method as claimed in claim 2 in which compression of the opposed ends of each length of tubing (2) is carried out with the tubing at a temperature within the range 800°C to 1200°C.

4. A length of pipe manufactured as claimed in any one of claims 1 to 3 and comprising a length of tubing (2) having male and female connecting pieces (18,12) integrally formed at the opposed ends thereof, the female connecting piece (12) having an external screw-thread (16) formed thereon, a nut (24) located on said length of tubing (2) and having an internal screw-thread (26) corresponding with the external screw-thread (16) on the female connecting piece (12), and co-operating abutment means (28,32) adapted to react between the nut (24) and the male connecting piece (18) whereby, on location of the male connecting piece (18) of one length of pipe in the female connecting piece (12) of another length of pipe, the nut (24) on the one length can be screwed onto the female connecting piece (12) of the other length to effect a connection between the two lengths of pipe.

5. A length of pipe as claimed in claim 4 in which the nut (24) is of the hammer lug type, having a plurality of circumferentially-shaped, radially projecting lugs (30) formed on the outer surface thereof.

6. A length of pipe as claimed in claim 4 or claim 5 in which the co-operating abutment means comprise an annular collar (32) located behind the male connecting piece (18) and adapted to react between said male connecting piece (18) and an internal surface (28) of the nut (24).

7. A length of pipe as claimed in claim 4 or claim 5 in which the co-operating abutment means comprise a plurality of segmental collets located within the nut (24) to react between an internal surface (28) of the nut (24) and a rear surface of the male connecting piece (18).

0178838

FIG.1

FIG.2

FIG.3

FIG.4

FIG.5

FIG.6